# EUROPÄISCHE PATENTANMELDUNG

(11) **EP 2 520 155 A1**
(43) Veröffentlichungstag der Anmeldung: **07.11.2012**
(21) Anmeldenummer: 12166693.7
(22) Anmeldetag: 03.05.2012
(51) Int. Cl.: A01D 57/20, A01D 61/00, A01D 78/10

(54) **Erntemaschine mit wenigstens einem Querförderer**

(30) Priorität: 02.03.2012 DE 102012004045; 03.05.2011 DE 102011100348
(71) Anmelder: CLAAS Saulgau GmbH, 88348 Bad Saulgau (DE)
(72) Erfinder: Pflanze, Sascha, 14822 Brück (DE); Ober, Martin, 78736 Trichtingen (DE)

(57) **Zusammenfassung**

Es wird eine Erntemaschine, wobei wenigstens eine erste Querfördereinheit (8, 9) zum Befördern von abgemähtem Erntegut in eine erste, quer zur Fahrtrichtung (F) gerichtete Förderrichtung (V) vorgesehen ist und/oder wobei wenigstens eine zweite Querfördereinheit (8, 9) zum Befördern von abgemähtem Erntegut in eine zweite, quer zur Fahrtrichtung (F) gerichtete Förderrichtung (V), die der ersten Förderrichtung (V) wenigstens teilweise entgegengesetzt ist, vorgesehen ist, wobei die erste und/oder zweite Querfördereinheit (8, 9) zwischen einer Arbeits- und einer Transportstellung verstellbar ist, wobei in einem ersten Arbeitsmodus die Erntegut fördernde, erste und/oder zweite Querfördereinheit (8, 9) eine erste Fördergeschwindigkeit aufweist, wobei in einem zweiten Arbeitsmodus die erste und/oder zweite Querfördereinheit (8, 9) von der Arbeits- in eine Zwischenstellung übergeht und/oder angeordnet ist, vorgeschlagen, die wenigstens teilweise die Nachteile des Stands der Technik beseitigt, insbesondere selbst in besonderen Situationen Aufwand und Zeit zum Zusammenlegen bzw. Abernten von abgemähtem Erntegut zu verringern. Dies wird dadurch erreicht, dass im zweiten Arbeitsmodus die erste und/oder die zweite Querfördereinheit (8, 9) eine zweite Fördergeschwindigkeit aufweist, wobei die zweite Fördergeschwindigkeit größer als die erste Fördergeschwindigkeit ist.

## Beschreibung

Die Erfindung betrifft eine Erntemaschine, insbesondere eine Mähmaschine, nach dem Oberbegriff des Anspruchs 1.

### Stand der Technik

In der EP 1 155 609 B1 wird eine derartige Mähvorrichtung beschrieben, wobei die Schwadeinrichtung mittels eines Gelenks über einen vertikal beweglichen Rahmen schwenkbar ist. Diese Druckschrift betrifft ein gezogenes Mähgerät mit eigenem Fahrwerk.

Darüber hinaus sind beispielsweise aus der EP 1 068 791 oder der DE 10 2005 051 544 bereits verschiedene Mähmaschinen bekannt, wobei diese insbesondere als Selbstfahrer ausgebildet sind und im Mähbetrieb frontseitig angeordnete Mäheinheiten aufweisen, denen je mindestens zwei Seitenmähwerke nachgelagert sind. Die Seitenmähwerke sind z.B. mittels Teleskopauslegern von einer zusammengeklappten bzw. hochgeschwenkten Transportstellung in eine ausgeklappte bzw. heruntergeschwenkte Arbeitsstellung verstellbar.

Die Seitenmähwerke besitzen Schwadeinheiten, wobei mittels eines Schwadband abgemähtes Mähgut der Seitenmähwerke aufgenommen und zur Längsmittelebene des Fahrzeugs transportiert und im Normalbetriebsfall gemeinsam auf einem einzigen Schwad abgelegt wird.

Die Frontmähwerke umfassen meistens einfachere Querförderer bzw. Leitscheiben oder dergleichen, die dafür Sorge tragen, dass im vorgenannten Fall mit einem einzigen Schwad das abgemähte Mähgut der Frontmähwerke zwischen den Laufrädern des Selbstfahrers abgelegt wird, auf den dann in einem "normalen" bzw. ersten Arbeitsmodus die Seitenmähwerke bzw. deren Querförderer zusätzlich abgemähtes Mähgut wie Gras oder dergleichen ablegen.

Darüber hinaus sind bereits in der Landtechnik derartige Mähmaschinen auch als Anbaugeräte für Traktoren oder dergleichen bekannt, die heckseitig mit der so genannten Dreipunktaufhängung am Traktor fixiert und angehoben werden können, um ohne Laufrad auszukommen. Häufig haben derartige heckseitige Mähgeräte ein entsprechend frontseitig angeordnetes einzelnes Mähwerk, das ebenfalls mittig längs der Längsmittelebene einen Schwad zwischen den Laufrädern des Traktors generiert. Das einzige heckseitige Mähwerk oder die beiden heckseitigen Mähwerke weisen wiederum jeweils einen Querförderer mit einem Transportband oder dergleichen auf, die entsprechend das Mähgut des/der Seitenmähwerke auf den bereits vorhandenen Mittelschwad des Frontmähwerks ablegen.

Derartige im Einsatz verwendete Mähgeräte, ob paarweise oder einzeln verwendet, weisen jedoch Nachteile u.a. im so genannten Vorgewende auf, das heißt ein Anheben des/der Mähwerke bzw. Mähgeräte in eine Zwischenstellung, die zwischen der Arbeits- und der Transportstellung angeordnet ist. Beispielsweise bei einer Überfahrt über einen bereits vorhandenen, zur Fahrtrichtung quer ausgerichteten Schwad, der überfahren werden muss, kann es bei einem nachfolgenden Mähgang zu einem nachteiligen Queren bzw. Überlappen oder gar Verwerfen des bereits vorhandenen Schwades kommen. Vor dem Erreichen des Querschwades, jedoch während der Fahrt werden im Allgemeinen die Mähwerke bzw. das Mähwerk in die Zwischenstellung des Vorgewendes angehoben. Hierdurch kreuzen bzw. schneiden sich der gerade erzeugte neue Schwad mit dem bereits auf dem Feld liegenden Querschwad. Sich kreuzende Schwade sind jedoch von großem Nachteil, da diese beim nachfolgenden Aufnehmen mittels Pick-Up bzw. Ladewagen einerseits nicht sauber aufgenommen werden können und anderseits dies gewöhnlich zu Problemen wie einem Verstopfen der Ladeorgane führt.

Zudem wird meistens unmittelbar nach dem Auslösen des Vorgewendevorganges ein sehr kleiner Radius des Fahrzeugs eingeschlagen, um möglichst effizient das Bearbeiten bzw. Mähen des Feldes fortzuführen. So muss hier häufig ein Wendemanöver realisiert werden, wobei der anschließende Bearbeitungsgang bzw. Mähgang in die entgegengesetzte Richtung bzw. um 180° gewendet weiter geführt werden muss. Hierzu sind sehr kleine Radien bzw. ein sofortiges, starkes Einschlagen der Lenkung notwendig.

Gerade bei einem derartigen starken Einschlagen der Lenkung, noch während die Arbeitseinheit bzw. das Mähwerk in die Vorgewendestellung übergeht, führt dies dazu, dass das Erntegut mit sehr kleinem Radius bzw. sehr enger Kurve abgelegt wird. Ein derart mit enger Kurve bzw. Radius abgelegter Schwad führt jedoch bei einem nachfolgenden Ernteschritt bzw. einer Aufnahme des Erntegutes mit einer Pick-Up-Maschine, vor allem mit einem Ladewagen, zu erheblichen Problemen. Letztere können oft keine derart engen Radien fahren, so dass der Schwad mehrfach angefahren werden muss.

Ein separater Arbeitsschritt mit dem Ladewagen oder gar mit einem separaten Schwader, (Hand-) Rechen oder dergleichen bedeutet jedoch einen zusätzlichen Arbeitsaufwand und zusätzliche Zeit bzw. Betriebsmittel, die benötigt werden, um das Erntegut möglichst vollständig aufzunehmen.

Darüber hinaus werden vor allem bei Ladewagen, die relativ enge Radien fahren, die Grasnarbe beeinträchtig bzw. beschädigt, da deren Stützräder hierbei eine erhebliche Querbewegung durchführen müssen und dabei die Grasnarbe "abschaben".

### Aufgabe und Vorteile der Erfindung

Aufgabe der vorliegenden Erfindung ist es dagegen, wenigstens teilweise die Nachteile des Stands der Technik zu beseitigen, insbesondere selbst in besonderen Situationen Aufwand und Zeit zum Zusammenlegen bzw. Abernten von abgemähtem Erntegut zu verringern.

Diese Aufgabe wird, ausgehend von Erntemaschinen der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Erntemaschine dadurch aus, dass im zweiten Arbeitsmodus die erste und/oder die zweite Querfördereinheit eine zweite Fördergeschwindigkeit aufweist, wobei die zweite Fördergeschwindigkeit größer als die erste Fördergeschwindigkeit ist.

Mit Hilfe dieser erfindungsgemäßen Maßnahme wird erreicht, dass die Schwadlegung im zweiten Arbeitsmodus bzw. im Vorgewende bzw. während dem Übergang von der Arbeitsstellung in die Zwischenstellung bzw. ins Vorgewende auch bei unterschiedlichsten Anforderungen bzw. Rahmenbedingungen oder Situationen in vorteilhafter Weise angepasst werden kann, wie z.B. beim Queren bzw. Kreuzen eines Querschwades bzw. eines bereits auf dem Feld vorhandenen/liegenden Schwades. So kann auch unter diesen Bedingungen ein eindeutig und klar abgegrenzter sowie nicht verworfener Schwad generiert werden, vor allem auch ohne dass der zu überfahrende bzw. zu kreuzende Querschwad bzw. der bereits auf dem Feld vorhandene/liegende Schwad beeinträchtigt wird. Dies führt dazu, dass auch unter derartigen besonderen Rahmenbedingungen bzw. Situation vor dem Abernten bzw. Aufladen des Erntegutes keine zusätzliche, separate Nachbearbeitung des/der Schwade bzw. kein zusätzlicher Aufwand für einen separaten Arbeitsschritt zum

Zusammenrechen bzw. Schwaden des Ernteguts notwendig wird.

Durch die Vergrößerung der Fördergeschwindigkeit der (einen oder beider) Querfördereinheit wird nämlich erreicht, dass das quer geförderte Erntegut definiert bzw. in vorgegebener Weise auch unter besonderen Betriebsbedingungen bzw. in besonderen Arbeitssituationen bereits abgelegt werden kann, bevor der zu querende bzw. kreuzende Querschwad bzw. bereits auf dem Feld vorhandene/liegende Schwad erreicht/überfahren wird.

Alternativ oder in Kombination zum Queren eines Querschwades ist die Erfindung in besonderem Maß auch dann von großem Vorteil, wenn z.B. unmittelbar nach dem Auslösen des Vorgewendes das Fahrzeug eine enge Kurve mit sehr kleinem Radius fährt. In diesem Fall wird gemäß der Erfindung das Erntegut derart schnell wegbefördert, dass dies möglichst bereits auf dem Feld liegt, bevor sich der Lenkausschlag nachteilig auf das Schwadlegen auswirkt. Auch in dieser Situation führt die Erfindung dazu, dass vor dem Abernten bzw. Aufladen des Erntegutes keine zusätzliche, separate Nachbearbeitung des/der Schwade bzw. kein zusätzlicher Aufwand für einen separaten Arbeitsschritt zum Zusammenrechen bzw. Schwaden des Ernteguts notwendig wird.

So kann festgestellt werden, dass gemäß der Erfindung das Leerlaufen der einen oder der beiden bzw. mehreren Querfördereinheiten in vorteilhafter Weise entscheidend verkürzt wird, dass auch in besonderen Situationen Nachteile weitestgehend bzw. effektiv vermieden werden, ohne dass das Fahrzeug seine Fahrgeschwindigkeit verringern muss oder sogar anhalten und warten muss. Ein Verringern der Fahrgeschwindigkeit oder sogar ein Anhalten und Warten des Fahrzeugs bzw. der Querfördereinheiten wäre eine relativ ineffiziente Maßnahme bzw. würde zu einer Haufenbildung am Ende des Schwades oder möglicherweise zu einem Verstopfen führen.

Bislang war beim Stand der Technik lediglich der erste Arbeitsmodus realisiert. Gemäß der Erfindung wird als Arbeitsmodus nicht das außer Betrieb Setzen einer der oder beider Querfördereinheiten betrachtet, sondern die erfindungsgemäßen Arbeitsmodi beziehen sich auf einen Betrieb, wobei eine Fördergeschwindigkeit vorhanden ist. Ein außer Betrieb setzen stellt gemäß der Erfindung keinen Arbeitsmodus, sondern einen Ruhemodus dar.

Vorzugsweise verschwenkt im zweiten Arbeitsmodus die erste und/oder die zweite Querfördereinheit von der Arbeits- in eine Zwischenstellung bzw. in das so genannte Vorgewende bzw. ist in dieser Zwischenstellung angekommen/angeordnet. Das heißt, dass vor allem die Zeitdauer bzw. Phase des Verschwenkens bzw. Anhebens die erfindungsgemäße zweite, vergrößerte Fördergeschwindigkeit hierbei verwirklicht wird. Hiermit wird in vorteilhafter Weise ermöglicht, dass beispielsweise bei einem Anfahren eines bereits auf dem Feld liegenden und quer zur Fahrtrichtung ausgerichteten Schwades manuell durch den Fahrer oder automatisiert mittels vorteilhafter Sensorik oder dergleichen der zweite Arbeitsmodus ausgelöst bzw. veranlasst werden kann. Vorteilhafterweise ist das geförderte Erntegut bereits auf dem Feld abgelegt bevor der bereits vorhandene, auf dem Feld liegende Schwad erreicht bzw. überfahren wird, um diesen nicht zu verwerfen bzw. zu überdecken.

In einer vorteilhaften Variante de Erfindung ist wenigstens eine Starteinheit zum Starten und/oder Auslösen des zweiten Arbeitsmodus und/oder des Verschwenkens der ersten und/oder zweiten Querfördereinheit vorgesehen. Einerseits kann das Starten der Vergrößerung gemäß der Erfindung manuell und/oder andererseits automatisiert bzw. von der Starteinheit und/oder einer Kontrolleinheit der Startereinheit nahezu selbsttätig gesteuert eingestellt bzw. verändert werden. Beispielsweise kann als Auslöser bzw. Initiator für das Auslösen auch das Anheben eines Frontmähwerkes vorgesehen werden. Der zweite Arbeitsmodus wird dann in diesem vorteilhaften Fall automatisch ausgelöst. Hierbei ist dann die Aktivierungs- bzw. Betätigungseinheit des Frontmähwerks als Starteinheit gemäß der Erfindung ausgebildet.

In besonderen Weiterbildungen der Erfindung umfasst die Starteinheit z.B. wenigstens eine Sensoreinheit zum Erfassen eines Hindernisses und/oder von Erntegut und/oder wenigstens einer Ortskoordinate der Querfördereinheit und/oder wenigstens einer Ortskoordinate der Erntemaschine. Beispielsweise ist ein Hindernis ein Baum, eine Hecke, ein Zaun, ein Bauwerk oder dergleichen. Als Erntegut kann hierbei durchaus noch nicht gemähtes und/oder nicht abgeerntetes wie auf dem Feld liegendes Erntegut, z.B. ein vorhandener Querschwad oder dergleichen, darstellen. Ein vorteilhafter Sensor bzw. Sensorik kann unter anderem als Ultraschall- und/oder Intrarot- und/oder Radar- und/oder Laser- und/oder Echolot- und/oder Optik-Sensor/-Sensorik und/oder als Bildaufnahmeeinheit wie ein Fotoapparat oder eine Videokamera ausgebildet werden. So ist denkbar, einen Vergleich erfasster Informationen bzw. Bilder mit hinterlegten Informationen bzw. Daten durchzuführen, ob ein Hindernis, insbesondere ein Querschwad, in Fahrtrichtung angeordnet bzw. vorhanden ist. Mit entsprechender Auswertung des Vergleichs kann dann eine vorteilhafte Veränderung bzw. Vergrößerung der Fördergeschwindigkeit gemäß der Erfindung realisiert werden.

In Bezug zur Erfassung einer Ortskoordinate kann in vorteilhafter Weise ein GPS-System bzw. GPS-Signale oder dergleichen verwendet werden, das beispielsweise abgespeicherte Informationen bzgl. Hindernisse oder dergleichen umfasst und/oder Informationen bzgl. unmittelbar zuvor generierte bzw. auf dem Feld abgelegtes Erntegut bzw. Schade aufweist. Diese gespeicherten Informationen können dann in vorteilhafter Weise für die Erkennung bzw. Steuerung der Fördergeschwindigkeit gemäß der Erfindung verwendet werden. Das bedeutet zum Beispiel, dass bereits beim Annähern an ein Hindernis oder ein Querschwad etc. die Fördergeschwindigkeit gemäß der Erfindung allmählich und/oder stufenweise vergrößert wird. Beispielsweise kann eine Kontrolleinheit mittels Fahrgeschwindigkeitsinformationen sowie Abstands- und/oder Ortskoordinateninformationen die Zeitdauer und/oder die Kreuzung bzw. das Überfahren des Querschwades oder dergleichen berechnen und dementsprechend die Änderung bzw. der Verlauf der Vergrößerung der Fördergeschwindigkeit steuern bzw. anpassen. So kann die Fördergeschwindigkeit in dem Maß erhöht werden, wie sich der Abstand zum Hindernis bzw. Erntegut/Querschwad verringert.

Auch kann die Fahrgeschwindigkeit der Erntemaschine beim Annähern an ein Hindernis bzw. an Erntegut wie ein Querschwad in vorteilhafter Weise angepasst bzw. entsprechend verkleinert werden.

In einer vorteilhaften Ausführungsform der Erfindung weist die Querfördereinheit/en wenigsten einen Sensor zum Erfassen des zu fördernden Erntegutes bzw. Erntegutstromes auf. Dieser kann als Vorhanden/Nicht-Vorhanden-Detektion ausgeführt werden oder auch differenzierte Informationen erzeugen. Zum Beispiel kann ein optischer, IR- oder Ultraschall-Sensor die Menge erfassen und hiervon abhängig die Fördergeschwindigkeit verändern bzw. gemäß der Erfindung vergrößern. So wird die Menge abnehmen, wenn kein Erntegut aufgenommen bzw. abgemäht wird und dies kann bedeuten, dass ein Querschwad angefahren wird. Dementsprechend kann der zweite Arbeitsmodus veranlasst und/oder die größere bzw. zweite Fördergeschwindigkeit realisiert werden.

Vorteilhafterweise ist die zweite Fördergeschwindigkeit um wenigstens 3 % oder wenigstens 10 % oder wenigstens 15 % größer als die erste Fördergeschwindigkeit. Es hat sich in ersten Versuchen gezeigt, dass etwa zwischen 3 % und ca. 20 % Vergrößerung der zweiten Fördergeschwindigkeit gegenüber der ersten Fördergeschwindigkeit eine vorteilhafte Anpassung auch an besondere Situationen bzw. Rahmenbedingungen realisierbar ist.

Vorzugsweise ist die zweite Fördergeschwindigkeit im Wesentlichen ca. 70% oder ca. 80% oder ca. 90% der maximalen Fördergeschwindigkeit. Die erste bzw. "normale" Fördergeschwindigkeit wird vielfach z.B. im Wesentlichen auf 40% bis 50% der maximalen Fördergeschwindigkeit eingestellt, so dass gemäß der Erfindung etwa fast eine Verdoppelung von der ersten in die zweite Fördergeschwindigkeit umgesetzt wird. Diese deutliche Beschleunigung bzw. Vergrößerung ermöglicht eine besonders vorteilhafte Schwadablage.

In einer bevorzugten Variante der Erfindung ist wenigstens eine Einstelleinheit zum Einstellen der erfindungsgemäßen Vergrößerung und/oder anschließenden Zurückstellung bzw. Verkleinerung der Fördergeschwindigkeiten vorgesehen. Einerseits kann die Einstellung des Maßes der Vergrößerung und/oder der Verkleinerung manuell und/oder andererseits automatisiert bzw. von einer Kontrolleinheit nahezu selbsttätig gesteuert eingestellt bzw. verändert werden.

Vorzugsweise ist die Starteinheit und/oder die Einstelleinheit in einer Fahrerkabine und/oder an einem Arbeitsplatz des Fahrers angeordnet. Hierdurch kann der Fahrer in vorteilhafter Weise vor oder während der Arbeit die Auslösung des zweiten Arbeitsmodus und/oder eine Änderung der Einstellung vornehmen, beispielsweise eine Änderung des Maßes der Vergrößerung und/oder der Verkleinerung. Beispielsweise kann dies stufenlos oder zum Beispiel in drei Stufen erfolgen, wie zum Beispiel eine Änderung der Fördergeschwindigkeit in der ersten Stufe um ca. 5 % und in der zweiten Stufe um ca. 10 % und in der dritten Stufe um ca. 20 % und/oder es kann pauschal eine Vergrößerung der Fördergeschwindigkeit auf z.B. im Wesentlichen 70% oder 80% oder 90% der maximalen Fördergeschwindigkeit vorgegeben bzw. eingestellt werden. Vorteilhafterweise erfolgt eine Zurückstellung bzw. Verringerung/Verkleinerung der Fördergeschwindigkeit nahezu automatisiert durch das Verstellen der Querfördereinheit/en in die Arbeitstellung. Jedoch ist durchaus eine manuelle Zurückstellung in die erste Fördergeschwindigkeit realisierbar.

Vorzugsweise ist wenigstens eine Arbeitseinheit vorgesehen, die eine der Querfördereinheiten und ein das Erntegut mähende Mähwerk umfasst. Die Querfördereinheit ist dem Mähwerk nachgeordnet, das heiß in Fahrtrichtung betrachtet hinter dem Mähwerk zur Aufnahme des gerade abgemähten Erntegutes ausgebildet.

Beispielsweise kann die Arbeitseinheit derart ausgebildet werden, dass die Querfördereinheit, insbesondere ein Bandschwader, in einer besonderen Betriebsweise derart vertikal verstellt wird, um ein Mähen ohne Querförderung zu realisieren.

Vorzugsweise ist die Erntemaschine gemäß der Erfindung als Anbaugerät zum Anbau an ein Trägerfahrzeug ausgebildet. Hierbei kann es sich einerseits um ein gezogenes Arbeitsgerät handeln, das ein eigenes Laufrad/Fahrwerk aufweist. Das Laufrad kann beispielsweise sowohl für den Transport auf der Straße als auch zum Fahren auf dem zu bearbeitenden Feld verwendet werden. Alternativ kann auch ein Anbaugerät vorgesehen werden, dass beim Transport beispielsweise mittels der üblichen Dreipunktanhängung angehoben wird. Bei dieser Variante der Erfindung benötigt die Erntemaschine gemäß der Erfindung kein eigenes Laufrad, zumindest für den Transport.

Alternativ kann die erfindungsgemäße Erntemaschine auch als Selbstfahrer ausgebildet werden, das heißt diese weist einen eigenen Antriebsmotor sowie Antriebsräder auf.

Generell kann die erfindungsgemäße Erntemaschine nicht nur als Mähmaschine, sondern auch als andere, in der Landwirtschaft in der Ernte einsetzbare Arbeitsmaschine ausgebildet werden. Beispielsweise sind auch Bandschwader ohne Mähwerk denkbar. So können durchaus auch Schwader, insbesondere auch Kreiselschwader mit mehreren Kreiselrechen, eine erfindungsgemäße Veränderung der Fördergeschwindigkeiten der entsprechenden (rechtsseitigen oder linksseitigen) Querfördereinheiten bzw. Kreisel aufweisen.

### Ausführungsbeispiel

Ein Ausführungsbeispiel ist in der Zeichnung dargestellt und wird anhand der Figuren nachfolgend näher erläutert.

Im Einzelnen zeigen:
- Figur 1: eine selbstfahrende Mähmaschine in perspektivischer, schematischer Seitenansicht mit vier erfindungsgemäßen Mähwerken mit zugeordneten Schwadeinheiten in Transportstellung,
- Figur 1a: eine selbstfahrende Mähmaschine gemäß Figur 1 in der Frontansicht,
- Figur 2a bis 2c: eine schematische Darstellung eines getragenen Anbaugeräts mit zwei erfindungsgemäßen Mähwerken und diesen zugeordneten Schwadeinheiten in drei unterschiedlichen Arbeitsstellungen,
- Figur 3: eine schematische Draufsicht auf das Anbaugerät gemäß Figur 2 in Arbeitsstellung,

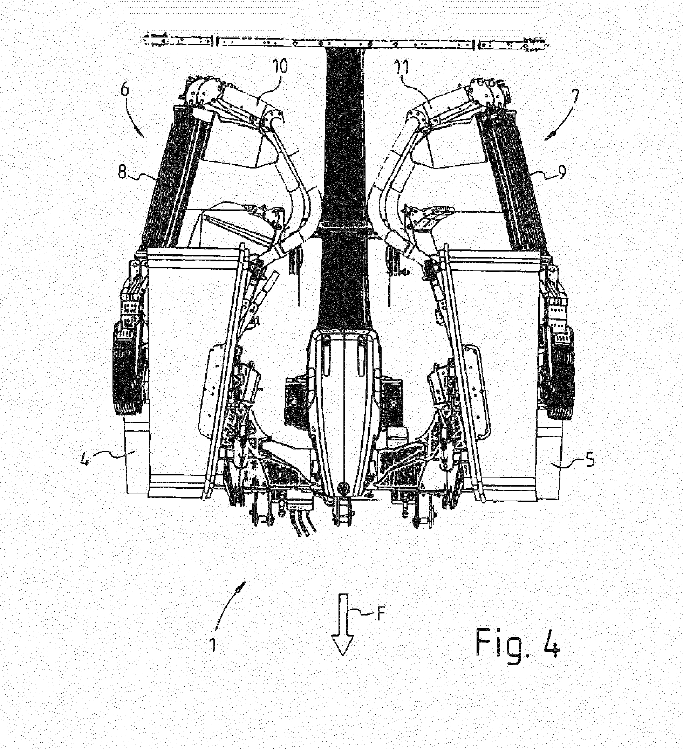

- Figur 4: eine schematische Draufsicht der Mähmaschine gemäß Figur 3 in der Transportstellung,
- Figur 5: eine schematische Seitenansicht einer weiteren Mähmaschine in Arbeitsstellung vor dem Erreichen eines bereits auf dem Feld liegenden Querschwades und
- Figur 6: eine schematische Darstellung einer Feldbearbeitung bei einem Querschwad mit einer Mähmaschine gemäß der Erfindung.

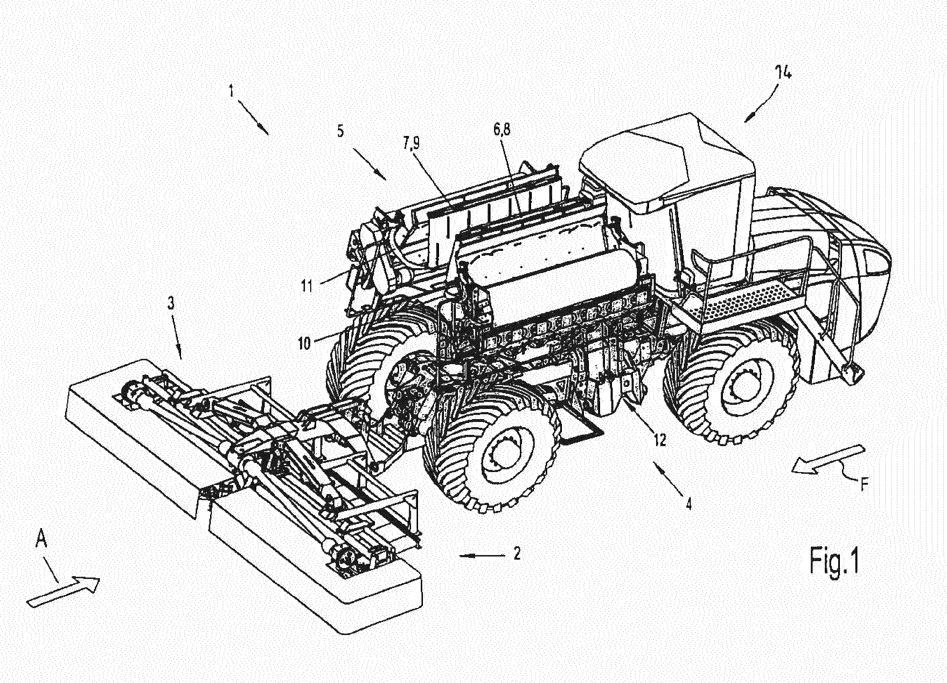

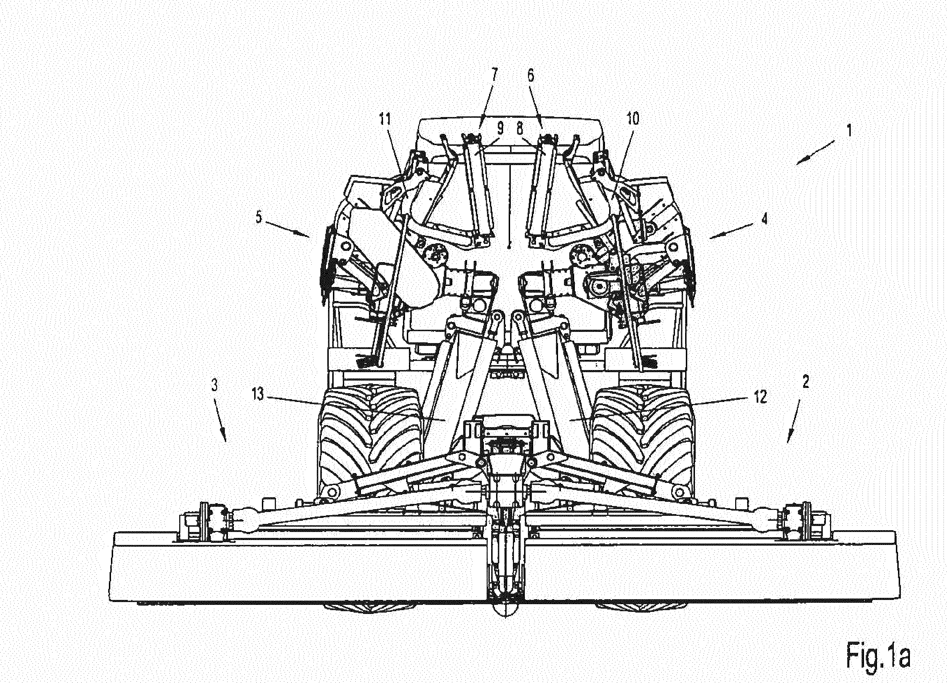

Eine selbstfahrende Mähmaschine 1 gemäß den Figuren 1 und 1a umfasst beispielsweise zwei ausklappbare Frontmähwerke 2, 3 jeweils mit einer ein Schwadband aufweisenden Schwadeinheit sowie mindestens zwei, in der dargestellten Transportstellung eingezogene Seitenmähwerke 4, 5. Die Seitenmähwerke 4, 5 sind jeweils mit einer Schwadeinheit 6, 7 versehen. Die Schwadeinheiten 6, 7 umfassen Schwadbänder 8, 9, die über Schwenkrahmen 10, 11 an den Seitenmähwerken 4, 5 schwenkbar befestigt sind.

Die Seitenmähwerke 4, 5 sind an Teleskopauslegern 12, 13 drehbar befestigt, so dass sie in der dargestellten Transportposition längs zur Fahrtrichtung F liegen und in der Arbeitsstellung ebenso wie die dargestellten Frontmähwerke 2, 3 quer zur Fahrtrichtung angeordnet werden.

Die selbstfahrende Mähmaschine 1 fährt in Arbeitsstellung in die Mähfahrtrichtung F. In der Transportstellung fährt die Mähmaschine 1 jedoch in die entgegengesetzte Transportfahrtrichtung A, so dass während des Transportes in vorteilhafter Weise eine Fahrkabine 14 vorne angeordnet ist. Während des Mähbetriebs ist die Fahrerkabine 14 dagegen im hinteren Bereich angeordnet, kann jedoch durch die seitlich ausgeklappten Arbeitseinheiten 4, 5, 6, 7 eine gute Sicht nach vorne zu den Frontmähwerken 2, 3 realisieren.

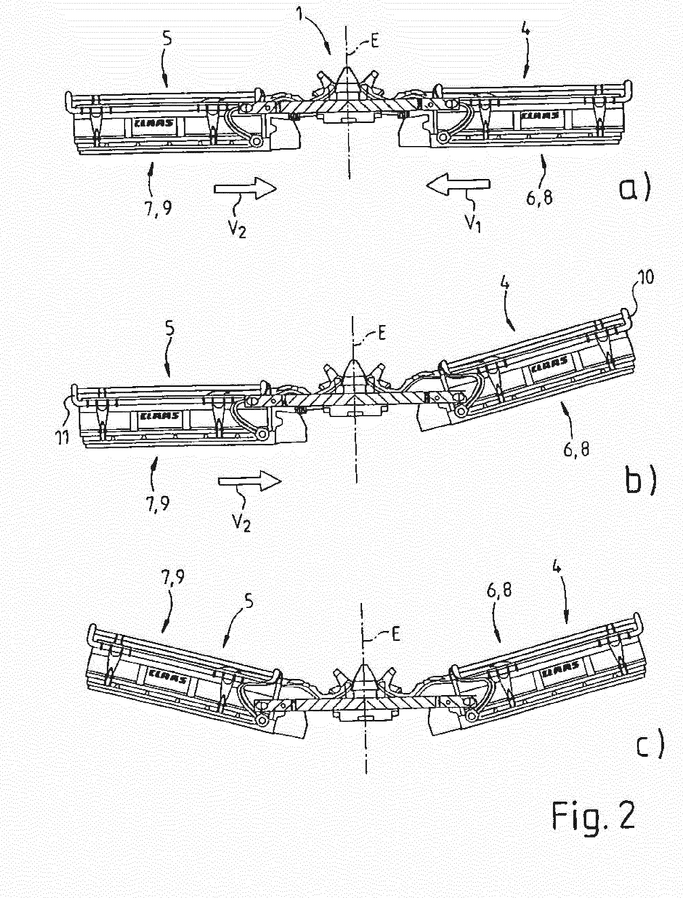

In Figur 2 ist eine zweite Ausführungsform einer Mähmaschine 1 dargestellt, die als Anbaugerät für einen Traktor oder dergleichen ausgebildet ist. Der Anbau erfolgt beispielsweise mit der standardisierten Dreipunktanhängung, so dass die Mähmaschine 1 gemäß Figur 2 beispielsweise hinten am Traktor während dem Transport in einer angehobenen Transportstellung transportiert werden kann.

In Figur 2a ist die "normale" Arbeitsstellung der beiden Seitenmähwerke 4, 5 sowie die diesen nachgeordneten bzw. zugeordneten Schwadeinheiten 6, 7 bzw. Schwadbänder 8, 9 im normalen Arbeitsbetrieb dargestellt. Das bedeutet, dass diese beispielsweise gemäß dem Stand der Technik während des Mähens des Erntegutes im Allgemeinen nahezu die gleichen Fördergeschwindigkeiten aufweisen und somit im erfindungsgemäßen ersten Arbeitsmodus betrieben werden.

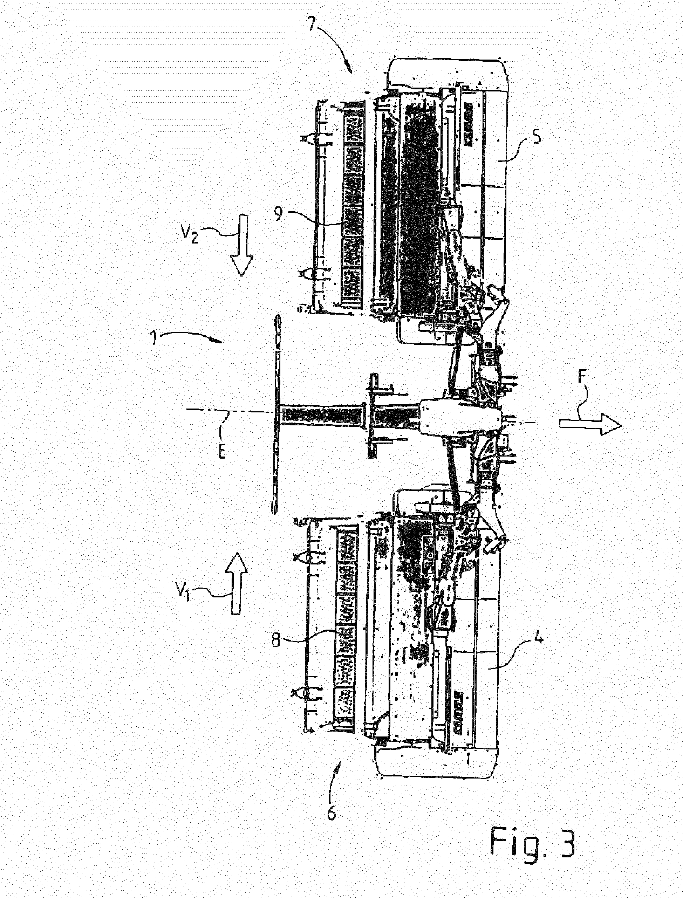

In Figur 3 ist die Arbeitsstellung der Arbeitseinheiten gemäß Figur 2a in Draufsicht schematisch dargestellt. Hier wird deutlich, dass die Schwadbänder 8, 9 in Fahrtrichtung F hinter den Seitenmähwerken 4, 5 derart angeordnet sind, dass diese unmittelbar das abgemähte Erntegut aufnehmen und in den mittigen Bereich der Längsmittelfläche E entlang der Förderrichtungen V1 und V2 transportieren.

Figur 2b zeigt eine Arbeitsstellung, wobei die rechte Arbeitseinheit bzw. das rechte Seitenmähwerk 4 gemeinsam mit dem rechten Schwadband 8 bzw. der rechten Schwadeinheit 6 in einer Zwischenstellung bzw. im sogenannten Vorgewende angehoben ist. Gemäß der Erfindung ist dies beispielsweise der erste Querförderer 6 und die linke Arbeitseinheit bzw. das linke Mähwerk mit dem linken Schwadband 9 bzw. der linken Schwadeinheit 7 befindet sich in der Mähposition. So ist z.B. die rechte Schwadeinheit 6 gemäß der Erfindung die erste Querfördereinheit 6, 8, die beispielsweise in diesem zweiten Arbeitsmodus eine größere Fördergeschwindigkeit als die der zweiten Schwadeinheit 7, 9 im ersten Arbeitsmodus aufweist.

Vorzugsweise wird die Fördergeschwindigkeit der ersten Schwadeinheit 6 im Moment des Anhebens bzw. beim Auslösen des Anhubs gemäß einer Ausführungsform der Erfindung etwas vergrößert bzw. beschleunigt.

In Figur 2c ist die Stellung der beiden Seitenmähwerke 4, 5 bzw. der Schwadeinheiten 6, 7 dargestellt, wobei beide Einheiten sich im so genannten Vorgewende, das heißt sich in der angehobenen Zwischenstellung befinden.

Gemäß der Erfindung weisen die beiden Schwadeinheiten 6, 7 während und/oder nach dem Verstellen von der Arbeitsstellung in die Vorgewendestellung gemäß Figur 2c) eine größere bzw. zweite Fördergeschwindigkeit auf als in der Arbeitsstellung bzw. im ersten Arbeitmodus. Diese Vergrößerung der Fördergeschwindigkeit kann durchaus auch temporär realisiert werden. Das heißt, dass die zweite bzw. vergrößerte Fördergeschwindigkeit nur für eine bestimmte bzw. vorgegebene/einstellbare Zeitdauer realisiert wird, z.B. bis der Querförderer entleert ist. Dieser entleerte Zustand kann in vorteilhafter Weise detektiert werden und in vorteilhafter Weise zu einem Zurücksetzen der Fördergeschwindigkeit oder zu einem Stoppen bzw. Beenden der Querförderung verwendet werden.

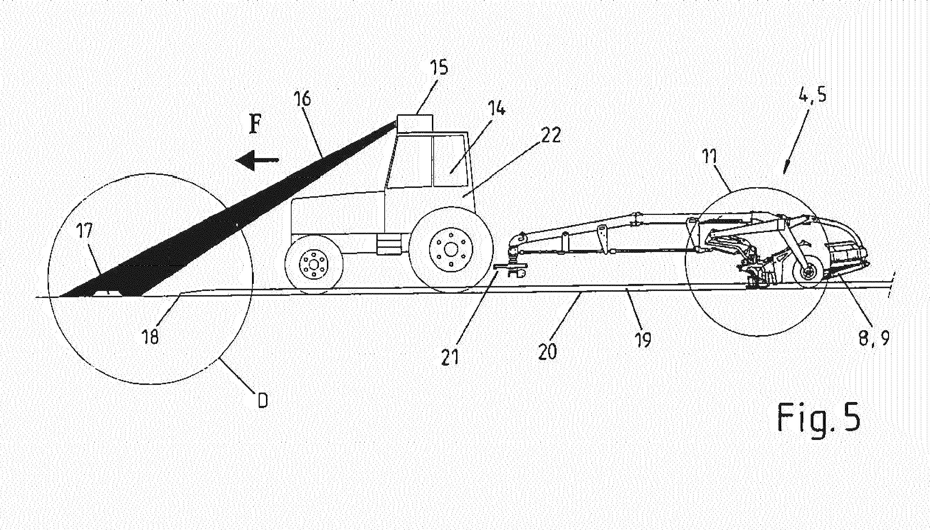

In Figur 5 ist eine weitere Ausführungsform der Erfindung mit einem Traktor 22 schematisch dargestellt, an dem mittels einer Anhängung 21 ein Mähwerk M angehängt ist bzw. von diesem gezogen wird. Das Mähwerk M umfasst ohne nähere Darstellung in vorteilhafter Weise zwei Seitenmähwerke 4, 5 mit jeweils einem Schwadband 8, 9 in etwa vergleichbar wie dies das in Figur 2 dargestellte Ausführungsbeispiel aufweist. Das heißt auch hier wird mittels beider Schwadbänder 8, 9 zur Mitte bzw. zur Längsmittelfläche E das abgemähte Erntegut befördert. Ebenso ist eine angehobene Vorgewendestellung bzw. eine angehobene Transportstellung vorgesehen.

Darüber hinaus ist in Figur 5 ein bereits auf dem zu bearbeitenden Feld 20 abgelegter Querschwad 17 sowie ein bereits abgelegter und in Betrachtungsrichtung vor dem Traktor angeordneter bzw. dargestellter Schwad 19 vorhanden. Dieser Schwad 19 wurde gemäß der Erfindung generiert. Dementsprechend ist ein Schwadende 18 des Schwades 19 vom Querschwad 17 in vorteilhafter Weise beabstandet. Dies wurde gemäß der Erfindung dadurch erreicht, dass die Fördergeschwindigkeit der Schwadbänder 8, 9 vor dem Erreichen bzw. vor dem Überfahren des Querschwades 17 vergrößert wurde, so dass das zu fördernde Mähgut sehr schnell auf dem Feld 20 abgelegt wurde und nicht über den Querschwad 17 zusätzlich lagert wurde. Die erhöhte Fördergeschwindigkeit ermöglichte zudem eine Schnellentleerung der Schwadbänder 8, 9 in der Weise, dass das Erntegut deutlich vor dem Querschwad 17 bereits auf dem Feld 20 abgelegt wurde.

Bei der dargestellten Variante ist eine Sensorik 15 auf dem Dach des Traktors 22 angeordnet, die mittels eines Sensorfeldes 16 ein Hindernis bzw. Erntegut wie einen Querschwad 17 detektieren kann. Beispielsweise handelt es sich hier um eine optische Sensorik 15 bzw. um eine Kamera oder dergleichen. Mit dieser Sensorik 15 kann in vorteilhafter Weise der Querschwad 17 erfasst und die Schwadablage gesteuert bzw. kontrolliert werden. So kann ggf. mit Hilfe der aktuellen Fahrgeschwindigkeit und/oder Ortskoordinate des Traktors 22 berechnet werden, wann bzw. wo der Querschwad 17 vom Mähwerk M überfahren wird.

Dementsprechend kann nach ggf. detektierter Beendigung des Mähens von stehendem Erntegut mittels vorteilhafter weiterer Sensorik die Fördergeschwindigkeit der Schwadbänder 8, 9 z.B. automatisiert erhöht und/oder das Mähwerk M in die Vorgewendestellung verbracht werden, so dass das Mähwerk M bzw. die Schwadbänder 8, 9 sehr schnell bzw. vor dem Querschwad 17 entleert und insbesondere angehoben werden.

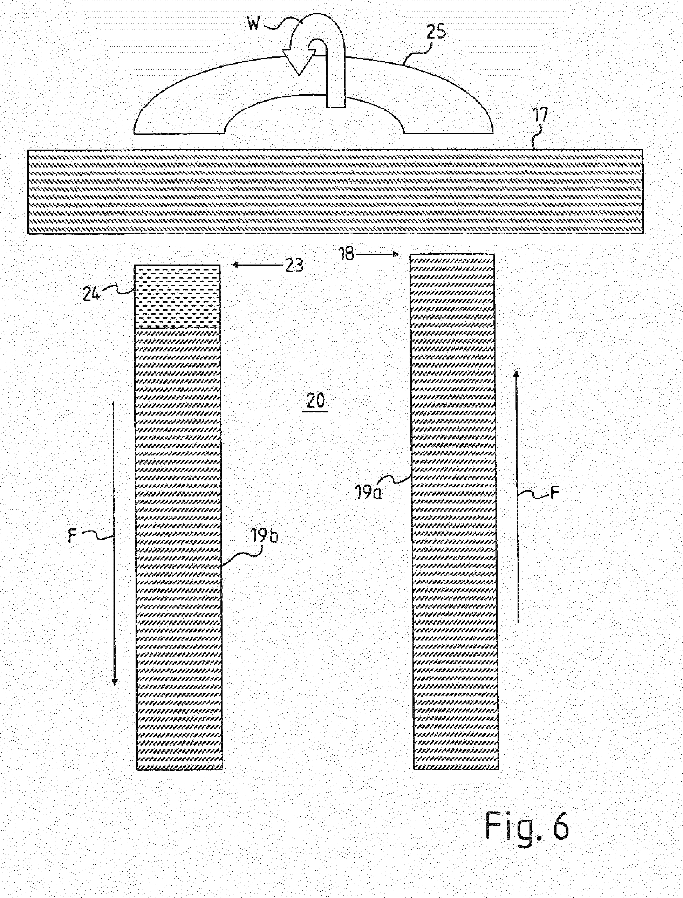

In Figur 6 ist darüber hinaus eine Feldbearbeitung bei einem Querschwad 17 mit einer Mähmaschine 1 gemäß der Erfindung dargestellt. Beim Erzeugen eines Schwades 19a, der auf einen Querschwad 17 stoßen würde, kann beispielsweise durch das Erkennen/Detektieren des Querschwads 17 (vgl. z.B. Figur 5) und/oder durch das (manuell betätigte) Anheben wenigstens eines Frontmähwerkes 2, 3 (in die Vorgewendestellung) und/oder durch das (manuell betätigte) Anheben wenigstens eines Seiten-/Heckmähwerkes 4, 5 (in die Vorgewendestellung) kurz vor dem Querschwad 17 wird die Fördergeschwindigkeit des Frontmähwerkes 2, 3 und/oder des Seiten-/Heckmähwerkes 4, 5 gemäß der Erfindung erhöht. Diese erfindungsgemäße zweite Fördergeschwindigkeit des Frontmähwerkes 2, 3 und/oder des Seiten-/Heckmähwerkes 4, 5 kann in vorteilhafter Weise nur kurzzeitig während dem Verschwenken in/bis zur Vorgewendestellung erfolgen oder aber auch während der gesamten Zeit/Dauer, in der die Mähwerke 2, 3, 4, 5 in der Vorgewendestellung bzw. während einer Vorgewendefahrt 25 (vgl. Figur 6) sich befindet. Das bedeutet, dass während einer gesamten Wende W die erfindungsgemäßen Querfördereinheiten 8, 9 bzw. Schwadbänder 8, 9 eine erhöhte, zweite Fördergeschwindigkeit aufweisen bzw. beibehalten.

Darüber hinaus ist in Figur 6 eine vorteilhafte Variante der Erfindung dargestellt, wobei nicht nur während der gesamten Wende W die erfindungsgemäßen Querfördereinheiten 8, 9 bzw. Schwadbänder 8, 9 die erhöhte, zweite Fördergeschwindigkeit aufweisen bzw. beibehalten, sondern alternativ oder in Kombination kann gemäß der Erfindung zu Beginn des Mähvorganges zur Erzeugung eines Schwades 19b die erhöhte, zweite Fördergeschwindigkeit der Querfördereinheiten 8, 9 bzw. Schwadbänder 8, 9 vorgesehen werden. Mit der erhöhten Fördergeschwindigkeit wird erreicht, dass ein Schadanfang 23 bzw. der Schwad 19b bzw. ein Schwadabschnitt 24 besonders nahe/dicht am Querschwad 17 angeordnet bzw. abgelegt wird. So wird eine besonders vorteilhafte Schwadablage aller Schwade 18, 17 ermöglicht.

### Bezugszeichenliste

- 1: Mähmaschine
- 2: Frontmähwerk
- 3: Frontmähwerk
- 4: Seitenmähwerk
- 5: Seitenmähwerk
- 6: Schwadeinheit
- 7: Schwadeinheit
- 8: Schwadband
- 9: Schwadband
- 10: Schwenkrahmen
- 11: Schwenkrahmen
- 12: Teleskopausleger
- 13: Teleskopausleger
- 14: Kabine
- 15: Sensorik
- 16: Sensorfeld
- 17: Querschwad
- 18: Schwadende
- 19: Schwad
- 20: Feld
- 21: Anhängung
- 22: Traktor
- 23: Schwadanfang
- 24: Schwadabschnitt
- 25: Vorgewendefahrt

- A: Transportfahrtrichtung
- D: Detektion
- E: Längsmittelfläche
- F: Mähfahrtrichtung
- M: Mähwerk
- V: Förderrichtung
- W: Wende

## Patentansprüche

1. Erntemaschine, wobei wenigstens eine erste Querfördereinheit (8, 9) zum Befördern von abgemähtem Erntegut in eine erste, quer zur Fahrtrichtung (F) gerichtete Förderrichtung (V) vorgesehen ist und/oder wobei wenigstens eine zweite Querfördereinheit (8, 9) zum Befördern von abgemähtem Erntegut in eine zweite, quer zur Fahrtrichtung (F) gerichtete Förderrichtung (V), die der ersten Förderrichtung (V) wenigstens teilweise entgegengesetzt ist, vorgesehen ist, wobei die erste und/oder zweite Querfördereinheit (8, 9) zwischen einer Arbeits- und einer Transportstellung verstellbar ist, wobei in einem ersten Arbeitsmodus die Erntegut fördernde, erste und/oder zweite Querfördereinheit (8, 9) eine erste Fördergeschwindigkeit aufweist, wobei in einem zweiten Arbeitsmodus die erste und/oder zweite Querfördereinheit (8, 9) von der Arbeits- in eine Zwischenstellung übergeht und/oder angeordnet ist, **dadurch gekennzeichnet, dass** im zweiten Arbeitsmodus die erste und/oder die zweite Querfördereinheit (8, 9) eine zweite Fördergeschwindigkeit aufweist, wobei die zweite Fördergeschwindigkeit größer als die erste Fördergeschwindigkeit ist.

2. Erntemaschine nach Anspruch 1, **dadurch gekennzeichnet, dass** wenigstens eine Starteinheit zum Starten und/oder Auslösen des zweiten Arbeitsmodus und/oder des Verschwenkens der ersten und/oder zweiten Querfördereinheit (8, 9) vorgesehen ist.

3. Erntemaschine nach einem der vorgenannten Ansprüche, **dadurch gekennzeichnet, dass** die Starteinheit wenigstens eine Sensoreinheit (15) zum Erfassen eines Hindernisses und/oder von Erntegut (17) und/oder wenigstens einer Ortskoordinate der Querfördereinheit und/oder wenigstens einer Ortskoordinate der Erntemaschine umfasst.

4. Erntemaschine nach einem der vorgenannten Ansprüche, **dadurch gekennzeichnet, dass** die Sensoreinheit (15) zum Erfassen eines Erntegutschwades (17, 19) ausgebildet ist.

5. Erntemaschine nach einem der vorgenannten Ansprüche, **dadurch gekennzeichnet, dass** die zweite Fördergeschwindigkeit um wenigstens 3% größer als die erste Fördergeschwindigkeit ist.

6. Erntemaschine nach einem der vorgenannten Ansprüche, **dadurch gekennzeichnet, dass** die zweite Fördergeschwindigkeit um wenigstens 10% größer als die erste Fördergeschwindigkeit ist.

7. Erntemaschine nach einem der vorgenannten Ansprüche, **dadurch gekennzeichnet, dass** die zweite Fördergeschwindigkeit wenigstens 70% der maximalen Fördergeschwindigkeit ist.

8. Erntemaschine nach einem der vorgenannten Ansprüche, **dadurch gekennzeichnet, dass** eine Fahrerkabine (14) und/oder ein Arbeitsplatz des Fahrers wenigstens die Starteinheit umfasst.

9. Erntemaschine nach einem der vorgenannten Ansprüche, **dadurch gekennzeichnet, dass** eine Arbeitseinheit (M) wenigstens die erste oder zweite Querfördereinheit (8, 9) und ein das Erntegut mähendes Mähwerk (2 bis 5) umfasst.

10. Erntemaschine nach einem der vorgenannten Ansprüche, **dadurch gekennzeichnet, dass** sie als Anbaugerät zum Anbau an ein Trägerfahrzeug (1, 22) ausgebildet ist.
